# EUROPÄISCHE PATENTANMELDUNG

(11) **EP 3 786 508 A1**
(43) Veröffentlichungstag der Anmeldung: **03.03.2021**
(21) Anmeldenummer: 20192994.0
(22) Anmeldetag: 27.08.2020
(51) Int. Cl.: F16L 59/02, F16L 59/16, F16L 59/18

(54) **GESCHLITZTER ISOLIERSCHLAUCH**

(30) Priorität: 29.08.2019 AT 507482019
(71) Anmelder: Steinbacher Dämmstoff Gesellschaft m.b.H., 6383 Erpfendorf (AT)
(72) Erfinder: STEINBACHER, Eduard, 6382 Kirchdorf in Tirol (AT)
(74) Vertreter: Torggler & Hofinger Patentanwälte

(57) **Zusammenfassung**

Isolierschlauch für eine Rohrleitung, mit einer elastischen Dämmschicht (2) und mit einer äußeren Schutzfolie (3), wobei die Schutzfolie (3) zumindest bereichsweise mit entlang des Umfangs des Isolierschlauchs (1) voneinander beabstandeten Längsschlitzen (4) versehen ist.

## Beschreibung

Die Erfindung betrifft einen Isolierschlauch für eine Rohrleitung, mit einer elastischen Dämmschicht und mit einer äußeren Schutzfolie.

Derartige Isolierschläuche sind bekannt und in Verwendung. Sie dienen vor allem der Wärme- und/oder Schallisolierung von Rohrleitungen in der Sanitärtechnik, also von Wasserleitungen, Gasleitungen, etc., bzw. Abwasserleitungen, Lüftungen oder dergleichen.

Die Isolierschläuche setzen sich aus einer elastischen Dämmschicht und einer äußeren, unelastischen und reißfesten Schutzfolie zusammen, und können zusätzlich eine Innenbeschichtung bzw. Folie aufweisen, um das Überziehen über die zu dämmende Rohrleitung zu erleichtern. Probleme ergeben sich bei Kupplungen und Muffen zwischen den Rohrstücken, die naturgemäß einen vergrößerten Durchmesser aufweisen, und das Überziehen wesentlich erschweren, da die reißfeste Schutzfolie die Erweiterung des Durchmessers des Isolierschlauchs verhindert. Es muss daher ein Isolierschlauch verwendet werden, dessen Innendurchmesser dem Durchmesser der Rohrleitung an der Kupplungsstelle entspricht und somit im Bereich der Rohrstücke viel zu groß ist. Dies bedeutet einen erhöhten Materialverbrauch als notwendig und gegebenenfalls auch eine Verschlechterung der Dämmeigenschaften.

Die Erfindung stellt sich die Aufgabe, einen Isolierschlauch zur Verfügung zu stellen, der die Nachteile des Standes der Technik vermeidet, um die Schwierigkeiten bei der Montage zu vermeiden.

Diese Aufgabe wird durch einen Isolierschlauch mit den Merkmalen des Anspruchs 1 gelöst.

Die Erfindung schlägt zur Lösung der Schwierigkeiten bei der Montage von Isolierschläuchen gemäß dem Stand der Technik vor, dass die Schutzfolie zumindest bereichsweise mit entlang des Umfangs des Isolierschlauchs voneinander beabstandeten Längsschlitzen, das heißt Schlitze, die sich in Längsrichtung des Isolierschlauchs erstrecken, versehen ist. Durch die Schlitzung der Schutzfolie kann der Isolierschlauch dem Durchmesser der Rohrstücke angepasst sein und diese anliegend umhüllen, da die Schutzfolie zumindest in jenem Ausmaß dehnfähig ist, das dem der elastischen Dämmschicht entspricht und für die Überwindung der Kupplungs- und Muffenbereiche der Rohrleitung notwendig ist.

Weitere vorteilhafte Ausführungen der Erfindung sind in den abhängigen Ansprüchen definiert.

In einer Ausführungsform der Erfindung sind einige, vorzugsweise alle, Längsschlitze durchgängig ausgebildet. Das bedeutet, dass die Längsschlitze keine Unterbrechung in Längsrichtung des Isolierschlauchs aufweisen. Dies ermöglicht eine maximale Dehnung des Umfangs der Schutzfolie.

In einer weiteren bevorzugten Ausführungsform der Erfindung sind die Längsschlitze auch in der Längsrichtung des Isolierschlauchs voneinander beabstandet. Das bedeutet, dass mehrere Längsschlitze entlang einer sich in Längsrichtung des Isolierschlauchs erstreckenden Linie angeordnet sind, wobei zwischen einzelnen Längsschlitzen Unterbrechungen angeordnet sind. Im Bereich der Unterbrechungen ist die Schutzfolie nicht geschlitzt. Dadurch weist die Schutzfolie und somit der Isolierschlauch eine höhere Stabilität auf, bei im Wesentlich gleich erhöhter Dehnbarkeit.

Bevorzugt ist dabei vorgesehen, dass die Längsschlitze in zueinander versetzten Reihen angeordnet sind. Das bedeutet, dass entlang des Umfangs benachbarte Längsschlitze an in axialer Richtung versetzten Positionen angeordnet sind. Dadurch wird die Stabilität und die Dehnbarkeit der Schutzfolie und somit des Isolierschlauchs weiter verbessert.

Die elastische Dämmschicht kann aus einem geschlossenzelligen Polyethylen-Weichschaum bestehen. Auch andere Materiale, vorzugsweise aus Kunststoff wie z.B. Thermoplaste, Duroplaste oder Elastomere sind möglich. Zudem können auch andere Schaumstoffarten wie z.B. Faserdämmstoffe, die für eine elastische Dämmschicht geeignet sind, die Dämmschicht ausbilden.
Die Dämmschicht kann beispielsweise eine Elastizität von mindesten 30 %, vorzugsweise von mindestens 50 %, aufweisen, wobei dies sowohl in radialer als auch in axialer Richtung, also bei Quer- und Längsbelastung, gelten kann. Infolge der Längsschlitze weist der Isolierschlauch dieselbe Elastizität auf.

Bevorzugt weist die elastische Dämmschicht eine Dicke zwischen 4 mm und 9 mm auf.

Die Schutzfolie kann aus Polyethylen (PE) bestehen. Auch andere Materialien, vorzugsweise aus oder mit Kunststoff, wie z.B. Polyester und auch Verbundfolien wie z.B. PE-Aluminium-PE oder PE-Aluminium-Papier-PE sind möglich.

In einer Ausführungsform der Erfindung weisen die Längsschlitze eine Länge von mindestens 2 mm und/oder einen Abstand in Längsrichtung von mindestens 2 mm auf.

In einer Ausführungsform der Erfindung weisen die Längsschlitze einen Abstand in Umfangsrichtung des Isolierschlauchs von mindestens 2 mm auf.

Die Erfindung wird nachstehend anhand der Figuren der beiliegenden Zeichnungen näher beschrieben, ohne darauf beschränkt zu sein. Es zeigen:
- Fig. 1: einen Ausschnitt einer Rohrleitung im Bereich einer Kupplungsstelle,
- Fig. 2: einen Schnitt durch die Rohrleitung entlang der Linie II - II von Fig. 1,
- Fig. 3: eine schematische Draufsicht auf einen nicht gedehnten Abschnitt des Isolierschlauchs,
- Fig. 4: eine schematische Draufsicht auf einen gedehnten Abschnitt des Isolierschlauchs, und
- Fig. 5: einen Ausschnitt einer Rohrleitung im Bereich einer Kupplungsstelle mit durchgehenden Längsschlitzen.

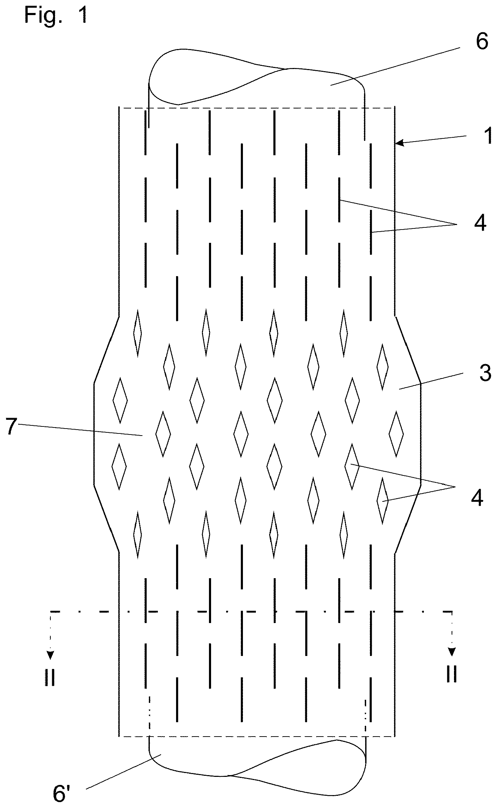

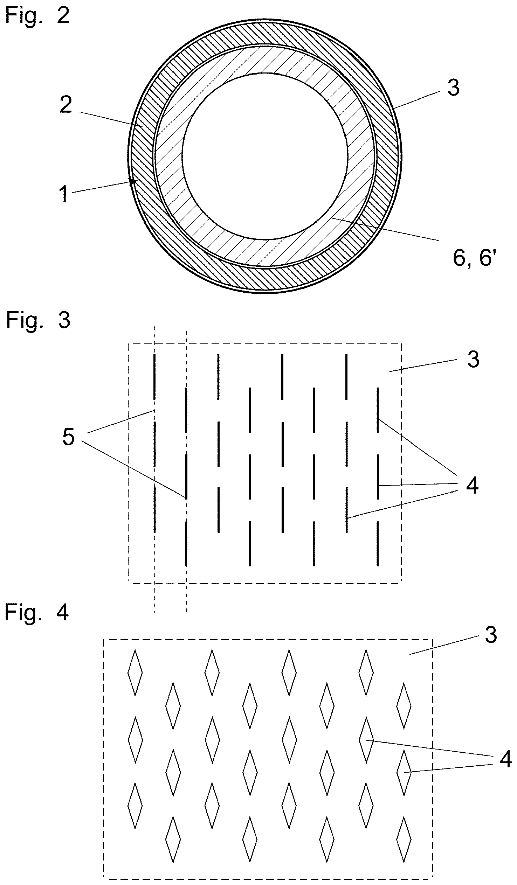

Fig. 1 zeigt zwei Rohre 6 und 6' einer Rohrleitung, die in einer Kupplungsstelle 7 ineinander gefügt und verbunden sind. Das untere der beiden Rohre 6' weist eine Muffe auf, in die das obere Rohr 6 eingesetzt ist. Der Durchmesser der Kupplungsstelle 7 ist daher größer als der der beiden Rohre 6, 6'. Die Rohrleitung ist mit einem Isolierschlauch 1 überzogen, der zumindest zweischichtig ist und eine elastische Dämmschicht 2 (Fig. 2) sowie eine äußere, unelastische bzw. wenig elastische Schutzfolie 3 aufweist. Gegebenenfalls kann der Isolierschlauch 1 innen mit einer nicht gezeigten, elastischen Gleitfolie versehen sein, um das Aufschieben auf die Rohrleitung bzw. deren Überziehen zu erleichtern.

Der Isolierschlauch 1 liegt, wie aus Fig. 2 ersichtlich ist, an den Rohren 6, 6' an und ist, wie aus Fig. 1 ersichtlich ist, im Bereich der Kupplungsstelle 7 aufgeweitet, obwohl die äußere Schutzfolie 3 an sich nicht oder nur unzureichend dehnbar ist. Dies ist dadurch möglich, dass die Schutzfolie 3 mit kleinen Längsschlitzen 4 versehen ist, die entlang des Umfangs mit Abstand zueinander in versetzten Reihen 5 angeordnet sind, siehe Fig. 3.

Die Vielzahl von Längsschlitzen 4 in der Schutzfolie 3 ermöglicht es, den Isolierschlauch 1 aufzuweiten, wie aus dem Vergleich der Figuren 3 und 4 gut ersichtlich ist, da die Schutzfolie 3 ähnlich einem Streckmetall gedehnt wird. Die schematische Darstellung der gedämmten Kupplungsstelle 7 in Fig. 1 zeigt dies anschaulich.

Der Isolierschlauch 1 umfasst insbesondere eine Dämmschicht 2 aus einem hochelastischen, geschlossenzelligen Polyethylen-Schaum, die etwa 4 mm bis 9 mm dick ist. Die Schutzfolie besteht insbesondere aus Polyethylen und ist weitgehend reißfest und mit Längsschlitzen 4 versehen, die eine Länge von mindestens 2 mm und einen Abstand zueinander, sowohl in Längsrichtung als auch in Umfangsrichtung, von ebenfalls mindestens 2 mm aufweisen. Die Längsschlitze 4 sind somit in versetzten Reihen angeordnet.

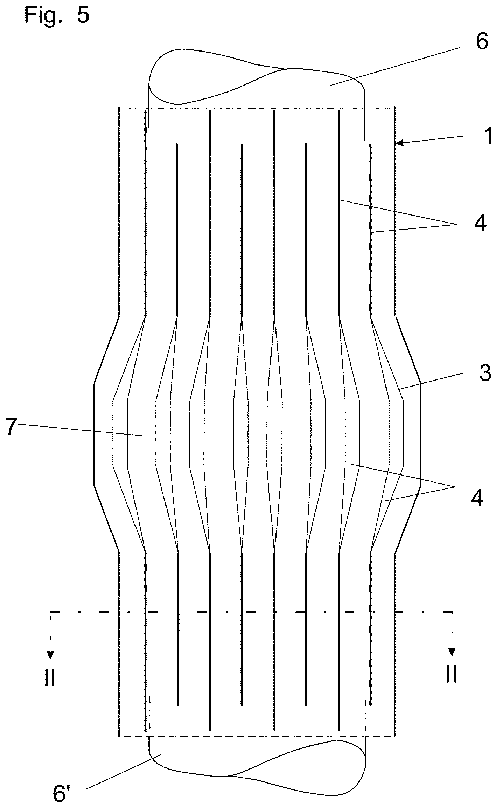

Fig. 5 zeigt zwei Rohre 6 und 6' einer Rohrleitung, die in einer Kupplungsstelle 7 ineinander gefügt und verbunden sind. Das untere der beiden Rohre 6' weist eine Muffe auf, in die das obere Rohr 6 eingesetzt ist. Der Durchmesser der Kupplungsstelle 7 ist daher größer als der der beiden Rohre 6, 6'. Die Rohrleitung ist mit einem Isolierschlauch 1 überzogen, der zumindest zweischichtig ist und eine elastische Dämmschicht 2 (Fig. 2) sowie eine äußere, unelastische bzw. wenig elastische Schutzfolie 3 aufweist. Dabei ist die Schutzfolie 3 in dieser Ausführungsform ohne Unterbrechungen ausgebildet.

## Patentansprüche

1. Isolierschlauch für eine Rohrleitung, mit einer elastischen Dämmschicht (2) und mit einer äußeren Schutzfolie (3), **dadurch gekennzeichnet, dass** die Schutzfolie (3) zumindest bereichsweise mit entlang des Umfangs des Isolierschlauchs (1) voneinander beabstandeten Längsschlitzen (4) versehen ist.

2. Isolierschlauch nach Anspruch 1, **dadurch gekennzeichnet, dass** zumindest einige, vorzugsweise alle der Längsschlitze durchgängig ausgebildet sind.

3. Isolierschlauch nach Anspruch 1, **dadurch gekennzeichnet, dass** die Längsschlitze (4) in der Längsrichtung des Isolierschlauchs (1) voneinander beabstandet sind.

4. Isolierschlauch nach Anspruch 3, **dadurch gekennzeichnet, dass** die Längsschlitze in zueinander versetzten Reihen (5) angeordnet sind.

5. Isolierschlauch nach einem der Ansprüche 1 bis 4, **dadurch gekennzeichnet, dass** die elastische Dämmschicht (2) aus einem geschlossenzelligen Polyethylen-Weichschaum besteht

6. Isolierschlauch nach einem der Ansprüche 1 bis 5, **dadurch gekennzeichnet, dass** die elastische Dämmschicht (2) eine Dicke zwischen 4 mm und 9 mm aufweist.

7. Isolierschlauch nach einem der Ansprüche 1 bis 6, **dadurch gekennzeichnet, dass** die Schutzfolie (3) aus Polyethylen, Polyester oder, dass die Schutzfolie (3) als Verbundfolie ausgebildet ist.

8. Isolierschlauch nach einem der Ansprüche 1 bis 7, **dadurch gekennzeichnet, dass** die Längsschlitze (4) eine Länge von mindestens 2 mm und/oder einen Abstand in Längsrichtung von mindestens 2 mm aufweisen.

9. Isolierschlauch nach einem der Ansprüche 1 bis 8, **dadurch gekennzeichnet, dass** die Längsschlitze (4) einen Abstand in Umfangsrichtung des Isolierschlauchs (1) von mindestens 2 mm aufweisen.
